# EUROPEAN PATENT SPECIFICATION

(11) **EP 2 409 054 B1**
(45) Date of publication and mention of the grant of the patent: **09.09.2015**
(21) Application number: 10727450.8
(22) Date of filing: 17.03.2010
(51) Int. Cl.: F16J 1/16

(54) **PISTON PIN AND A PISTON - PISTON PIN COMBINATION**
KOLBENBOLZEN UND KOMBINATION AUS KOLBEN UND KOLBENBOLZEN
AXE DE PISTON ET COMBINAISON CONSTITUÉE D'UN PISTON ET D'UN AXE DE PISTON

(30) Priority: 20.03.2009 FI 20095289
(43) Date of publication of application: 25.01.2012
(73) Proprietor: Wärtsilä Finland Oy, 65380 Vaasa (FI)
(72) Inventor: LILJENFELDT, Gösta, FI-65450 Solf (FI); NYNÄS, Håkan, FI-65280 Vaasa (FI); SÄRS, Harry, FI-65370 Vaasa (FI)
(74) Representative: Ansala, Jyrki Matti
(86) International application number: PCT/FI2010/050203
(87) International publication number: WO 2010/106228

(56) References cited:
- WO-A1-2006/064096
- DE-C1- 3 516 309
- FR-A1- 2 470 311
- US-A- 3 702 092
- US-A- 4 508 019

## Description

The invention relates to a piston pin for attaching the piston of a piston engine to a connecting rod according to the preamble of patent claim 1, the piston pin comprising at its first and the second end a first and a second affixing area for connecting the piston pin to the piston, and between these at the center area a third affixing area for connecting the piston pin to the connecting rod, the piston pin having a circular cross-sectional projection and the piston pin comprising a lightening.

The invention also relates to a combination of a piston and a piston pin according the preamble of patent claim 6.

In piston engines the reciprocating movement of the piston is transformed into a rotating movement of the crankshaft by connecting each piston via a connecting rod to the crankshaft. In a trunk piston engine the piston has been installed by a small end bearing to the connecting rod so that the connecting rod may rotate in relation to the piston. It is known art to attach a piston to a connecting rod by means of a floating piston pin. In this solution the piston pin has been arranged against the bearing surfaces of the connecting rod so that in operation it can rotate into any position. In other words only the movement of the piston pin in the longitudinal direction is limited. Another piston pin type is a locked piston pin. This kind of a piston pin is locked also for the rotating movement either to the piston or the connecting rod, thus is cannot rotate even during the running of the engine.

Reciprocating parts induce varying forces in the rotating parts of the engine. The forces originate mainly from the gas forces of the cylinder and the inertia of mass and the direction of the forces is mainly the longitudinal direction of the cylinder although forces are created also in other directions. The greater the mass of the reciprocating parts have the stronger the forces are. Thus, by reducing the mass of the moving parts these varying forces may be diminished and also the suppression of the engine vibration may be simplified.

Publication FR2764959 discloses a type of a locked piston pin the mass of which has been lightened by arranging in the pin a cut-out extending from one of its ends to the other and having an elliptic cross section. The entire outer surface of the pin is cylindrical. The space of the aperture inside the piston pin provides the lightening compared with a fully solid construction.

Publication DE 3546443 C1 discloses another solution for fixing a piston to a connecting rod. In this solution the piston pin has a double T form. This kind of a piston pin has been lightened externally. Here the piston pin has been fixed non-rotatingly to the piston.

Publication US 3,702,092 also discloses a piston pin that has been lightened, in this case by eccentrically disposed holes in the piston pin.

Although lightening of a piston pin is known as such in the prior art and by way of the above publications, the object of the invention is to advance the prior art of the field by presenting a piston pin the durability of which allows a long disturbance-free operation and by means of which the power transmission from the piston to the connecting rod may be carried out in a reliable manner. The object of the invention is also to provide a combination of a piston and a piston pin, by means of which the vibration of the engine is minimized and the operation reliability of which is high.

The objects of the invention are achieved by means of a piston pin for attaching the piston to a connecting rod, the piston pin comprising at its first and its second end a first and a second affixing area for attaching the piston pin to the piston, and between these in the center area a third affixing area for attaching the piston pin to the connecting rod, the projection of the piston pin cross section being circular and the piston pin including a lightening which lightening has been provided at both ends of the piston pin outside said center area and first and the second affixing areas are provided with slide bearing surfaces. The invention is mainly characterized in that the lightening comprises an external lightening formed on the side surface of the piston extending from the end of the piston pin to its center area and cutting the outer surface of the piston pin so that the piston pin has both ends a cross section of essentially the shape of an I beam and that said lightening includes an additional lightening provided inside the piston pin including at least two apertures extending through in the longitudinal direction.

In this way the piston pin is under varying loads sufficiently rigid in the main direction of the load, but has a lightened mass and still the connection of the piston to the connecting rod may be carried out reliably.

The lightening portion has preferably been arranged outside the third affixing area in the center area. Then the attaching surface of the piston pin to the connecting rod is as large as possible and the forces are divided as evenly as possible to the piston pin and the connecting rod.

The lightening is preferably arranged symmetric in relation to the center line of the cross section of the piston pin.

The center area of the piston pin preferably has a circular cross section along its entire longitudinal extension.

The lightening portions inside the piston pin, such as apertures, have been provided symmetrically in relation to the center line of the piston pin.

The objects of the invention are also achieved with a piston - piston pin combination where the piston comprises a piston pin extending in the perpendicular direction in relation to the longitudinal direction for attaching the piston via a piston pin to the connecting rod, the piston pin comprising at its first and its second end a first and a second affixing area for attaching the piston pin to the piston and between these in the center area a third affixing area for attaching the piston pin to the connecting rod, the projection of the piston pin cross section being circular, and the piston pin including a lightening portion, said lightening portion being provided at both ends of the piston pin outside said center area and in which the first and the second affixing areas are provided with slide bearing surfaces, and the lightening comprises an external lightening formed on the side surface of the piston extending from the end of the piston pin to its center area and cutting the outer surface of the piston pin so that the piston pin has both ends a cross section of essentially the shape of an beam, and said lightening includes an additional lightening provided inside the piston pin including at least two apertures extending through in the longitudinal direction.

The center area of the piston pin has a circular cross section and its counter surface in the pin is cylindrical.

The external lightening means in this context a form deviating from a circular cross section, the form being created by removing of leaving out material from the portion constituting the outer surface of the piston pin.

The other characteristic additional features of the invention are disclosed in the appended patent claims and the description of the drawings.

The invention is described more in detail below with reference to the appended schematic drawings of which
Figure 1 illustrates the piston of a piston engine connected to a connecting rod,
Figure 2 illustrates the section II-II in Figure 1, and
Figures 3A, 3B and 3C illustrate some piston pin embodiments.
Figures 3D and 3E illustrate piston pin embodiments according to the invention.

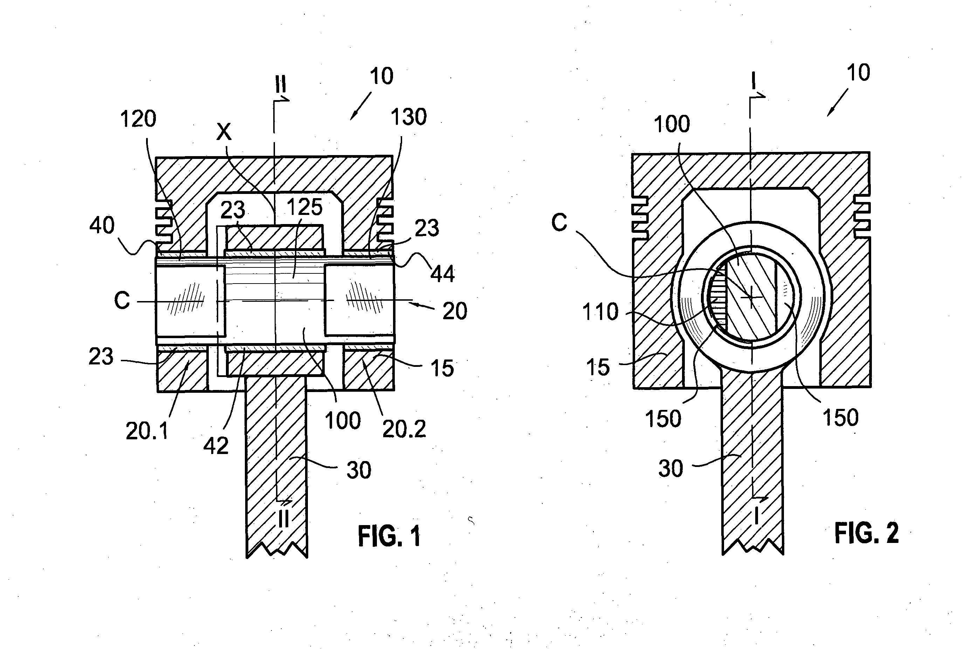

Figures 1 and 2 illustrate schematically a piston 10 of a piston engine. Figure 1 illustrates section I-I of Figure 2 and Figure 2 section II-II of Figure 1. The piston 10 has an essentially circular section in the direction X perpendicular to the longitudinal direction. The piston comprises a body portion 15 which may be assembled of components or may be comprised of one piece. The body portion 15 has been provided in the direction perpendicular to the longitudinal direction with an aperture 20 of the piston pin 100. The aperture has two sections so that it comprises two concentric, successive circular apertures 20.1 and 20.2 having the same diameter and extending in the direction of the longitudinal axis C, between which the end 30 of the connecting rod is disposed. Also at the end of the connecting rod, there is an aperture for the piston pin 100. The apertures in the piston 10 mentioned above have preferably slide bearing surfaces 23. In order to affix the piston 10 to the connecting rod 30 the end of the connecting rod is placed in connection with the piston so that the aperture of the connecting rod and the piston aperture 20 for the piston pin are aligned, and subsequently the piston pin 100 is placed in the apertures. Then the assembly forms the piston - piston pin combination.

The piston pin 100 is lockable to be non-rotating and in the embodiment illustrated in Figures 1 and 2 is has been locked to the piston 10 by a specific locking arrangement 110 which locks the piston pin 100 non-rotating in relation to its longitudinal axis. The locking arrangement 110 has been illustrated here in a very schematic manner.

The piston pin 100 comprises a first end 120 and a second end 130 comprising a first and a second affixing area for the piston pin. When installed in place the piston pin will be attached to the piston via the apertures 20.1 and 20.2. In the central area 125 of the piston pin 100 between the first and the second affixing area there is a third affixing area via which the piston pin will be attached to the connecting rod when it has been installed in its place. In this way the piston is connected via the piston pin to the end of the connecting rod 30.

The third affixing area of the central area 125 of the piston pin 100 preferably has an essentially cylindrical outer surface whereby, irrespective of the rotational position of the connecting rod and the piston in relation to the longitudinal axis of the piston pin, the force transmitted by the piston pin between the connecting rod and the piston pin is distributed very evenly.

The piston pin 100 is preferably formed of one single piece. The piston pin comprises an external lightening 150 provided at both ends of the piston pin outside said third attaching area having a cylindrical outer surface. The external lightening means a lightening which has an impact on the form of the side surfaces of the piston pin in the direction of the longitudinal axis. The lightening at the ends of the piston pin is according to the embodiments of Figures 1 and 2 the only lightening of the piston pin. There are slide bearing surfaces 40, 42, 44 provided for the first, the second and also for the third affixing area. According to an embodiment of the invention the piston pin has been locked non-rotating in relation to the piston. According to another embodiment of the invention the piston pin has been locked non-rotating in relation to the connecting rod. Depending on the locking of the piston pin the bearing allowing the rotating movement is formed either in the connection between the piston pin and the connecting rod or in the connection between the piston pin and the piston. Slide bearings provide a planar slide surfaces for changing the position of the connecting rod at different positions of the piston during the work cycle of the engine. When the piston pin is locked to the piston at the first and the second affixing areas the slide bearing may be replaced for example with sleeves to balance to a larger area the forces transmitted from the piston pin to the body of the piston.

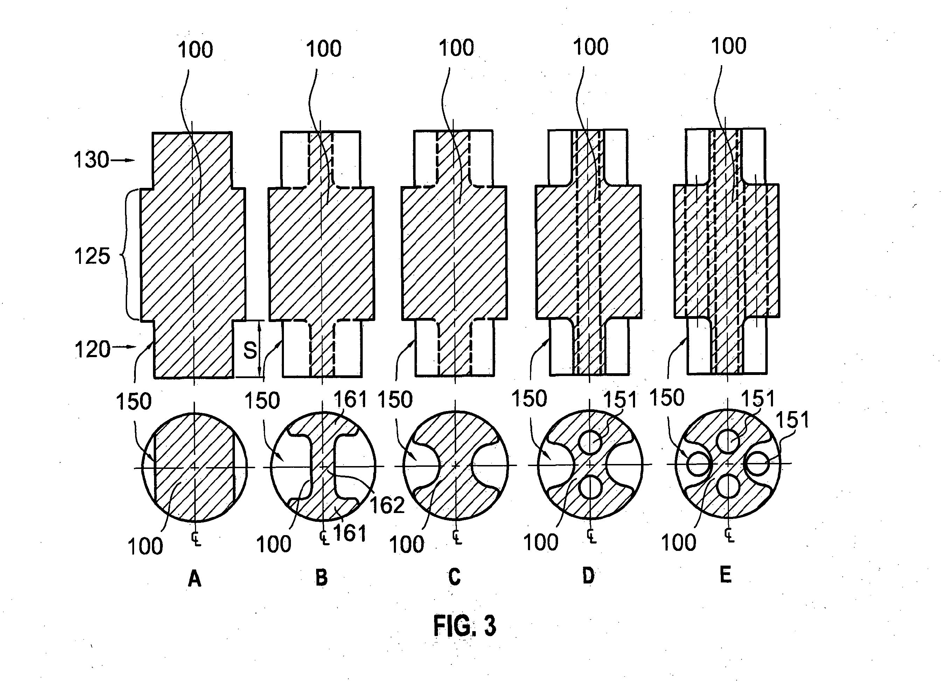

As can be seen in Figure 2 the form of the longitudinal projection of the piston pin 100 is a circle. The piston pin comprises preferably at the center area an area having an essentially cylindrical outer surface. The lightening is provided so that the form of the cross section of the piston pin lightening is symmetrical. The center line 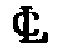 of the cross section of the piston in the piston - piston pin assembly (Figure 3) is installed to be essentially the same with the longitudinal direction of the piston, in other words the main direction of the loading. The lightening in Figure 2 comprises at both ends of the piston pin two recesses, opposite in relation to the center line and having the same form, provided by the sides of the piston pin, the recesses being formed by the planar surface of the piston pin in the longitudinal direction thereof and by the planar surface of the piston pin in the transverse direction thereof. Two opposite planar surfaces in the longitudinal direction of the piston pin are thus formed in the piston pin at the lightening portion. The center area 25 of the piston pin, in other words the third affixing area, is a cylindrical surface free from lightening portions at the outer surface.

The lightening is preferably carried out so that, when the piston pin has been installed to the piston thus forming a piston - piston pin combination, the lightening narrows the piston pin in the direction transverse to the main loading direction of the piston pin. The cross section of the lightening is preferably in the main loading direction, in other word in the direction of the cross section of the center line of the piston pin, equal with the cross section of the piston pin center area 125.

Figure 3 illustrates several different embodiments A - E of the piston pin 100. The upper row shows in cross section a piston pin 100, which corresponds a situation where the piston pin in the piston - piston pin combination is in operation position, essentially transverse to the longitudinal direction of the piston. In the lower row the piston has been illustrated in cross section in its longitudinal direction at its first end 120.

Figure A illustrates an embodiment of a piston pin according to Figures 1 and 2. In the piston pin there are lightenings 120, 130 at both ends, forming parallel planar surfaces at the sides of the piston pin, starting from the piston pin and extending for a distance S towards the center area 125 of the piston pin. The distance S is preferably as long as the first and the second affixing area of the piston pin.

Figure 3B illustrates an embodiment of the piston pin in which the piston pin has, due to the lightening portion, at both ends 120, 130 a cross section of nearly the shape of an I beam. There the surface of the cross section at the edges in the main loading direction is wider than between the edges, thus forming the flanges 161 and the waste 162 of the I beam. This waste is relatively thin comprising opposite planar surfaces. Figure 3 C illustrates a modification of the embodiment of Figure 3B where both the waste and the flanges of the I beam are clearly stronger. In the embodiment of Figure 3C the lightening is formed of two essentially cylindrical lightenings such as bores extending from the end of the piston pin to its center area and cutting the outer surface of the piston pin. In the embodiment according to the invention and illustrated in Figure 3D there is inside the piston pin an additional lightening 151 comprising two apertures extending through it in its longitudinal direction. The apertures are disposed symmetrically in relation to the center axis of the piston pin. In the embodiment of Figure 3E, also according to the invention, there are two additional apertures in the piston pin similar to the one in Figure 3D, extending through it in the longitudinal direction, to provide additional lightening 151. Also here the apertures have been provided symmetrically in relation to the center axis of the piston pin.

It must be understood that only a few most preferred embodiments of the invention have been presented above. Thus it is obvious that the invention is not limited to the embodiments disclosed above but may be modified in many ways in connection with various piston engines within the scope of protection defined by the appended patent claims. The features described in conjunction with the different embodiments may be used in conjunction with other embodiments as well and/or various combinations of the described features may be made within the frame of the invention, if so desired and if technical feasibility for this exists the invention being limited only by the scope of the appended claims.

## Claims

1. A piston pin (100) for attaching the piston (10) of a piston engine to the connecting rod (30), the piston pin comprising at its first end (120) and its second end (130) a first and a second affixing area for attaching the piston pin to the piston and between these in the center area (125) a third affixing area for attaching the piston pin (100) to the connecting rod (30), the cross-sectional projection of the piston pin being circular in form and the piston pin including a lightening (150) provided at both ends of the piston pin (120, 130) outside said center area (125), and in which the first and the second affixing areas are provided with slide bearing surfaces, **characterized in that** the lightening comprises an external lightening (150) formed on the side surface of the piston extending from the end (120,130) of the piston pin to its center area (125) and cutting the outer surface of the piston pin so that the piston pin has both ends (120,130) a cross section of essentially the shape of an I beam, and that said piston pin (100) includes an additional lightening (151) provided inside the piston pin including at least two apertures extending through in the longitudinal direction.

2. A piston pin according to patent claim 1, **characterized in that** said external lightening (150) has been provided at both ends of the piston pin (120, 130) outside the third affixing area at said center area (125).

3. A piston pin according to any of the patent claims 1 - 2, **characterized in that** said external lightening (150) has been provided symmetrically in relation to the center line 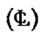 of the cross section of the piston pin.

4. A piston pin according to patent claim 1, **characterized in that** the center area (125) of the piston pin has a circular cross section.

5. A piston pin according to patent claim 1, **characterized in that** said at least two apertures have been provided symmetrically in relation to the center line of the piston pin (100).

6. A combination of a piston and a piston pin, where the piston (10) includes a piston pin (100) extending in the perpendicular direction in relation to its longitudinal direction for attaching the piston via a piston pin to the connecting rod (30), **characterized in that** the piston pin is a pin (100) according to any one of the preceding patent claims.

7. A combination of a piston and a piston pin according to claim 6, **characterized in that** the piston pin is lockable to the piston so that the center line of the cross section of the piston pin at the lightening is parallel with the longitudinal axis of the piston.

8. A combination of a piston and a piston pin according to claim 6, **characterized in that** the center area (125) of the piston pin has a circular cross section and its counter surface in the piston is cylindrical.

9. A combination of a piston and a piston pin according to claim 6, **characterized in that** the piston pin has been locked non-rotating in relation to the piston (10).

10. A combination of a piston and a piston pin according to claim 6, **characterized in that** the piston pin is attached to the piston via two concentric, successive, circular apertures (20.1, 20.2) having the same diameter and arranged into the body portion (15) of the piston (10).

## Patentansprüche

1. Kolbenbolzen (100) zum Anbringen des Kolbens (10) eines Kolbenmotors an einer Pleuelstange (30), wobei der Kolbenbolzen an seinem ersten Ende (120) und an seinem zweiten Ende (130) einen ersten und einen zweiten Fixierbereich zum Anbringen des Kolbenbolzens an dem Kolben und dazwischen in dem Mittelbereich (125) einen dritten Fixierbereich zum Anbringen des Kolbenbolzens (100) an der Pleuelstange (30) umfasst, wobei die Querschnittsprojektion des Kolbenbolzens eine kreisrunde Form aufweist und der Kolbenbolzen eine Erleichterung (150) umfasst, die an beiden Enden des Kolbenbolzens (120, 130) außerhalb des Mittelbereichs (125) bereitgestellt ist, und wobei der erste und der zweite Fixierbereich mit Gleitlagerflächen versehen sind, **dadurch gekennzeichnet, dass** die Erleichterung eine äußere Erleichterung (150) umfasst, die an der Seitenfläche des Kolbens gebildet ist und sich von dem Ende (120, 130) des Kolbenbolzens zu seinem Mittelbereich (125) erstreckt und die Außenfläche des Kolbenbolzens so schneidet, dass beide Enden (120, 130) des Kolbenbolzens einen Querschnitt mit im Wesentlichen der Form eines I-Trägers aufweisen, und dass der Kolbenbolzen (100) eine zusätzliche Erleichterung (151) umfasst, die im Inneren des Kolbenbolzens bereitgestellt ist und wenigstens zwei Öffnungen umfasst, die in der Längsrichtung hindurch verlaufen.

2. Kolbenbolzen nach Patentanspruch 1, **dadurch gekennzeichnet, dass** die äußere Erleichterung (150) an beiden Enden des Kolbenbolzens (120, 130) außerhalb des dritten Fixierbereichs in dem Mittelbereich (125) bereitgestellt wurde.

3. Kolbenbolzen nach einem der Patentansprüche 1 - 2, **dadurch gekennzeichnet, dass** die äußere Erleichterung (150) in Bezug auf die Mittellinie (CL) des Querschnitts des Kolbenbolzens symmetrisch bereitgestellt wurde.

4. Kolbenbolzen nach Patentanspruch 1, **dadurch gekennzeichnet, dass** der Mittelbereich (125) des Kolbenbolzens einen kreisrunden Querschnitt aufweist.

5. Kolbenbolzen nach Patentanspruch 1, **dadurch gekennzeichnet, dass** wenigstens zwei Öffnungen in Bezug auf die Mittellinie des Kolbenbolzens (100) symmetrisch bereitgestellt wurden.

6. Kombination aus einem Kolben und einem Kolbenbolzen, wobei der Kolben (10) einen Kolbenbolzen (100) umfasst, der in Bezug auf seine Längsrichtung senkrecht verläuft, um den Kolben über den Kolbenbolzen an einer Pleuelstange (30) anzubringen, **dadurch gekennzeichnet, dass** der Kolbenbolzen (100) ein Bolzen nach einem der vorhergehenden Patentansprüche ist.

7. Kombination aus einem Kolben und einem Kolbenbolzen nach Anspruch 6, **dadurch gekennzeichnet, dass** der Kolbenbolzen so an dem Kolben arretiert werden kann, dass die Mittellinie des Querschnitts des Kolbenbolzens an der Erleichterung zu der Längsachse des Kolbens parallel verläuft.

8. Kombination aus einem Kolben und einem Kolbenbolzen nach Anspruch 6, **dadurch gekennzeichnet, dass** der Mittelbereich (125) des Kolbenbolzens einen kreisrunden Querschnitt aufweist und seine Gegenfläche in dem Kolben zylinderförmig ist.

9. Kombination aus einem Kolben und einem Kolbenbolzen nach Anspruch 6, **dadurch gekennzeichnet, dass** der Kolbenbolzen in Bezug auf den Kolben (10) nicht drehend arretiert wurde.

10. Kombination aus einem Kolben und einem Kolbenbolzen nach Anspruch 6, **dadurch gekennzeichnet, dass** der Kolbenbolzen über zwei konzentrische, aufeinanderfolgende kreisrunde Öffnungen (20.1, 20.2), die den gleichen Durchmesser aufweisen und in dem Körperabschnitt (15) des Kolbens (10) eingerichtet wurden, an dem Kolben angebracht ist.

## Revendications

1. Axe de piston (100) pour fixer le piston (10) d'un moteur à pistons à la bielle (30), l'axe de piston comprenant sur sa première extrémité (120) et sa seconde extrémité (130), une première et une deuxième zone de fixation pour fixer l'axe de piston au piston et dans le centre (125) entre celles-ci, une troisième zone de fixation pour fixer l'axe de piston (100) à la bielle (30), la projection en section transversale de l'axe de piston étant circulaire et l'axe de piston comprenant un allégement (150) prévu aux deux extrémités de l'axe de piston (120, 130) hors du centre (125), et dans lequel les première et deuxième zones de fixation sont dotées de surfaces porteuses coulissantes, **caractérisé en ce que** l'allégement comprend un allégement externe (150) formé sur la surface latérale du piston s'étendant de l'extrémité (120, 130) de l'axe de piston vers son centre (125) et coupant la surface extérieure de l'axe de piston de telle sorte que l'axe de piston a les deux extrémités (120, 130) avec une section transversale ayant essentiellement la forme d'une poutre en I, et **en ce que** l'axe de piston (100) comprend un allégement supplémentaire (151) prévu à l'intérieur de l'axe de piston comprenant au moins deux ouvertures s'étendant au travers dans la direction longitudinale.

2. Axe de piston selon la revendication 1, **caractérisé en ce que** l'allégement externe (150) est prévu aux deux extrémités de l'axe de piston (120, 130) hors de la troisième zone de fixation sur le centre (125).

3. Axe de piston selon la revendication 1 ou 2, **caractérisé en ce que** l'allégement externe (150) est prévu symétriquement par rapport à la ligne médiane (CL) de la section transversale de l'axe de piston.

4. Axe de piston selon la revendication 1, **caractérisé en ce que** le centre (125) de l'axe de piston a une section transversale circulaire.

5. Axe de piston selon la revendication 1, **caractérisé en ce qu'**au moins deux ouvertures sont prévues symétriquement par rapport à la ligne médiane de l'axe de piston (100).

6. Combinaison d'un piston et d'un axe de piston, dans lequel le piston (10) comprend un axe de piston (100) s'étendant dans la direction perpendiculaire par rapport à sa direction longitudinale pour fixer le piston à la bielle (30) par un axe de piston, **caractérisé en ce que** l'axe de piston est un axe (100) selon l'une quelconque des revendications précédentes.

7. Combinaison d'un piston et d'un axe de piston selon la revendication 6, **caractérisé en ce que** l'axe de piston peut être verrouillé sur le piston de façon à ce que la ligne médiane de la section transversale de l'axe de piston sur l'allégement soit parallèle à l'axe longitudinal du piston.

8. Combinaison d'un piston et d'un axe de piston selon la revendication 6, **caractérisé en ce que** le centre (125) de l'axe de piston a une section transversale circulaire et sa contre-surface dans le piston est cylindrique.

9. Combinaison d'un piston et d'un axe de piston selon la revendication 6, **caractérisé en ce que** l'axe de piston a été verrouillé en non-rotation par rapport au piston (10).

10. Combinaison d'un piston et d'un axe de piston selon la revendication 6, **caractérisé en ce que** l'axe de piston est fixé sur le piston par deux ouvertures circulaires concentriques successives (20.1, 20.2) présentant le même diamètre et agencées dans la partie de corps (15) du piston (10).
